# EUROPEAN PATENT SPECIFICATION

(11) **EP 3 728 153 B1**
(45) Date of publication and mention of the grant of the patent: **12.06.2024**
(21) Application number: 18822336.6
(22) Date of filing: 18.12.2018
(51) Int. Cl.: C03C 13/00, C03C 25/321, C04B 30/02, C08J 5/04, C08L 1/26, C08L 1/28

(54) **MINERAL FIBER BASED COMPOSITES**
VERBUNDWERKSTOFFE AUF MINERALFASERBASIS
COMPOSITES À BASE DE FIBRES MINÉRALES

(30) Priority: 19.12.2017 GB 201721306
(43) Date of publication of application: 28.10.2020
(73) Proprietor: Knauf Insulation SPRL, 4600 Visé (BE)
(72) Inventor: JONES, Gareth, 1435 Mont-Saint-Guibert (BE)
(74) Representative: ARC-IP
(86) International application number: PCT/EP2018/085541
(87) International publication number: WO 2019/121713

(56) References cited:
- EP-A1- 2 138 475
- WO-A2-2011/106232
- US-A- 4 957 559
- US-A1- 2014 165 879
- US-A1- 2017 198 142
- US-A1- 2017 210 952
- US-B1- 6 677 261

## Description

The present invention relates to composite products based on mineral fibers, such as glass fibers, glass wool or stone wool, manufactured using a binder composition. These composite products may be made from woven or nonwoven fibers, e.g. fiberglass, or mineral wool, such as glass wool or stone wool.

Known binders used in the manufacture of such composite products are based on phenolformaldehyde. More recently, several formaldehyde-free binders have been developed. One such binder chemistry involves polyester chemistry based on a polyacid component, anhydride or salt derivative thereof, and a polyhydroxy component. Another such binder chemistry involves the condensation of ammonium salt of inorganic acids or of polycarboxylic acids or an amine, preferably polyamine, with reducing sugars as thermosets.

While known binders and composite material made therewith show interesting mechanical properties, there always is a need for alternative binder compositions. Particularly in the case of commodity products, sourcing of raw material needs to be guaranteed and low material and production costs are of importance.

The documents US 2017/210952 A1 and US 2017/198142 A1 describe composite products comprising mineral fibers.

In accordance with one of its aspects, the present invention provides a composite product as defined in claim 1 and a process for the manufacture of them as defined in claim 12. The dependent claims define preferred or alternative embodiments.

The term "binder composition" as used herein means all ingredients applied to the matter to be bound and/or present on the matter to be bound, notably prior to curing, (other than the matter and any moisture contained within the matter) including reactants, solvents (including water), reaction product and any additives.

The term "binder" is used herein to designate a thermoset binder resin obtained from the "binder composition".

The term "cured" means that the components of the binder composition have been subjected to conditions that lead to chemical change, such as covalent bonding, hydrogen bonding and chemical crosslinking, which may increase the cured product's durability and solvent resistance, and result in thermoset material.

The term "dry weight of the binder composition" as used herein means the weight of all components of the binder composition other than any water that is present (whether in the form of liquid water or in the form of water of crystallization).

The term "cellulose ether" includes cellulose based polymers, including alkyl cellulose, such as methylcellulose and ethylcellulose, hydroxyalkyl cellulose, such as hydroxyethyl cellulose, hydroxypropyl cellulose, hydroxyethyl methyl cellulose, hydroxypropyl methyl cellulose, and carboxyalkyl cellulose, such as carboxymethyl cellulose. Latter may be used in a salt form such as sodium carboxymethyl cellulose. Most of the cellulose ethers are soluble in water. These compounds are known and used to modify rheological properties of compositions. They may be used as thickeners in food and feed products, in pharmaceutical products, in paints and glues and in cosmetics. They also are known for having an emulsifying effect and a water retention effect in cementitious compositions. These cellulose ethers form thermoset resin binders by themselves; it is believed that at low pH, carboxymethylcellulose for instance may form crosslinks through lactonisation between carboxylic acid groups and free hydroxyl groups. It has now been found that said cellulose ethers are suitable to bond mineral fibers in a mineral fiber based composite product.

Properties obviously vary significantly with the substituents of the hydroxyl function, degree of substitution and degree of polymerisation.

Aqueous solutions of the relevant cellulose ethers show non-Newtonian behaviour. Their viscosity will vary as a function of molecular weight of the cellulose ether, but also as a function of pH, temperature, agitation/sheer thinning and concentration. The skilled person will be able to select the appropriate cellulose ether in appropriate concentration, knowing that aqueous binder compositions comprising said cellulose ether need to be sprayable on the fiber or particulate substrate.

Advantageously, the degree of substitution of the hydroxyl groups in the cellulose ether moieties varies from 0.20, or 0.30, or 0.40, or 0.50, to 3.00, particularly to 2.50, or to 2.00, or to 1.50, or even to 1.00.

A preferred cellulose ether shows a molecular weight of 80000 or less, preferably 70000 or less, more preferably 60000 or less, more particularly 50000 or less, for example about 40000 Daltons.

Cellulose ether solutions show relatively high viscosities depending on the molecular weight of the relevant cellulose ethers, operating temperature, pH, sheering and other conditions, due to their non-Newtonian properties. It has been found though that using low Mw cellulose ethers at low concentrations, one may obtain viscosities that are suitable for binder preparation in accordance with the present invention, and the obtained binder performs well in comparison to standard binders, despite the low amount of cellulose ether present.

It has been found that composite products bonded by cellulose ether based binders show improved bond strength, especially under dry conditions. Further, such cellulose ether based binder compositions show a significantly increased cure rate. As an example, a 2 wt% binder composition based on sodium carboxy methyl cellulose having a MW of less than 50000 cures significantly faster (over a minute faster) than a 3 wt.% binder composition comprising dextrose at 85 wt.% and ammonium citrate at 15 wt.%.

The binder composition may comprise from 0.2 or 0.5 or 1.0 to 5.0, or 7.0 or 10.0 or 15.0 wt. % cellulose ether, based on the total aqueous binder composition. When used more specifically in the manufacture of a mineral wool insulation, the solid content of the aqueous binder composition may be in the range of from 1.0 to 20 w% or 1.0 to 15 w%, preferably from 5 to 10 w%, based on the weight of the total aqueous binder composition.

The cellulose ether binder composition may be used in the manufacturing of composite products, such as woven and non-woven mineral fibers, for instance glass fibers or mineral wool fibers. Such bonded mineral fibers, for instance mineral glass wool or stone wool fibers, may be used in the manufacturing of thermal and/or acoustic insulating materials. In view of the manufacture of a fiber mat, such as for insulating products, for instance, an aqueous binder composition is applied onto the fibers, e.g. by spraying, and the binder impregnated mineral fibers are deposited as a mat and subsequently subjected to heat for curing of the binder composition, hence forming an assembly of bonded fibers.

In preferred embodiments, the present invention provides good product and/or binder performance, notably mechanical performance, particularly under dry conditions, at low cellulose ether rates.

It is believed that at high temperatures, the cellulose ether crosslinks with itself to form a strong binder. The degree of substitution, i.e. the average number of hydroxyl group substituents per anhydroglucose unit, influences the interaction.

The binder composition may further comprise additives that impart mechanical strength under wet conditions. It has been found that ammonium salts, preferably ammonium salts of inorganic acids, such as ammonium phosphate, ammonium nitrate or ammonium sulfate, show good results. Other additives may be selected from azetidinium compounds.

Azetidinium compounds are known in the art. Multifunctional azetidinium compounds may be made using different coupling agents and amine functional monomer with different ratios, containing at least one substituted or unsubstituted four membered nitrogen containing heterocycle. The azetidinium group is chemically bonded with a homopolymer or a copolymer chain, comprising one or more non-azetidinium monomer unit incorporated into the polymer structure. A preferred azetidinium-based material suitable for use comprises at least two-azetidinium groups in the chain. A preferred azetidinium polymer in accordance with the invention shows the general structure below: 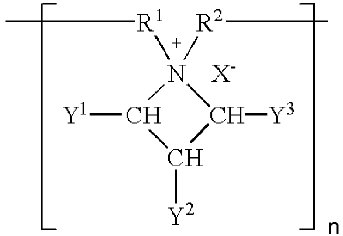
wherein n is an integer, generally n≥1, R₁ may be C₁ - C₂₅ alkanediyl, preferably C₁ - C₁₀ alkanediyl or C₁ - C₅ alkanediyl, possibly substituted with a hydroxyl group, carboxyl functional group or an amine,
R₂ may be independently R1 or -R₃-NH-C(O)-R4-, with R₃ and R₄ being independently C₁ - C₂₅ alkanediyl, preferably C₁ - C₁₀ alkanediyl or C₁ - C₅ alkanediyl,
Y₁ and Y₃ being H or a C1-C5 alkyl group, possibly substituted with a hydroxyl group, an amine or a carboxyl group,
Y2 being OH or independently Y1,
X⁻ being a halogen counter ion.

As an example, compound coded CA1025 (Hercules) is a suitable additive in accordance with the invention.

Azetidinium functionalized polymers have highly reactive quaternary ammonium groups, which may improve the properties of the final product, and may provide antimicrobial activity due to the presence of the cationic azetidinium groups. Azetidinium functional groups are reactive due to the angle strain and can react with a number of nucleophiles. Azetidinium compounds may polymerize at elevated temperature and/or by radical initiation.

The wet strength improving additive may be present in a weight ratio of 0.5, preferably 1, to 20 %, preferably up to 15 w%, or even 10 w% in the binder composition. In the case of ammonium sulphate, it has been found that an advantageous binder composition comprises about 5 w% mechanical strength improving additive.

The above wet strength improving additives are of particular interest to improve the wet strength after weathering in an autoclave as well as after soaking. The soaking test in which the bonded composite material is soaked during 10 minutes in a water bath at 80°C is the most stringent wet test. It has been shown that the above wet strength improving additives improve the wet strength after weathering in autoclave as well as after soaking to such an extent that the bonded material recovers 70 to 90 % of the dry bond strength after a sufficient drying period. So far, a 2 hours drying period has been used. In some applications, a drying period of 1 or 1.25 or 1.5 hours may be sufficient. In some other applications, extended drying periods of 2.25, 2.5, 2.75 or 3 hours may be advisable.

The invention binder composition may further comprise a viscosity reducing agent. Viscosity reducing agents for cellulose ether compositions are known. Good results have been obtained with urea and derivatives thereof. It has been found that urea, in addition to reducing viscosity, increases the bond strength. Other examples are biurea, thiourea. Further examples are guanidine salts, sodium salts, such as sodium nitrate, sodium chloride, hydrochloric acid, calcium salts, such as dichloride, Ca⁺⁺ as well as Li⁺ precursors that provide the ions in solution.

Further viscosity reducing agents suitable for cellulose ether based binder compositions are amine compounds, comprising inorganic and organic amines, having at least one primary amine group, and salts thereof as well as compounds that generate such amines in situ. A primary polyamine suitable as viscosity reducing agent may be a molecule having the formula H₂N-Q-NH₂, wherein Q is an alkyl, cycloalkyl, heteroalkyl or cycloheteroalkyl, each of which may be optionally substituted. Q may be a C₂-C₂₄ alkyl, C₂-C₉ alkyl or C₃-C₇ alkyl, preferably a C₆ alkyl, or cyclohexyl, cyclopentyl, cyclobutyl or a benzyl group.
For example, the primary polyamine may be a diamine, triamine, tetraamine, or pentamine. According to one embodiment, the polyamine is a triamine selected from a diethylenetriamine, 1-piperazineethaneamine, or bis(hexamethylene)triamine. In another embodiment, the polyamine is a tetramine, for example triethylenetetramine. In another embodiment, the polyamine is a pentamine, for example tetraethylenepentamine. Examples are 1,2-diaminoethane, 1,4-diaminobutane, 1,5-diaminopentane, 1,6-diaminohexane, 1,12-diaminododecane, 1,4-diaminocyclohexane, 1,4-diaminoben-zene, diethylenetriamine, triethylenetetramine, tetraethylenepentamine, 1-piperazine-ethaneamine, 2-methyl- pentamethylenediamine, 1,3-pentanediamine, and bis(hexamethylene)triamine, as well as 1,8-diaminooctane. According to a preferred embodiment the primary polyamine is 1,6-diaminohexane (hexamethylenediamine, HMDA). In another embodiment, the primary polyamine is a polyether-polyamine. For example, according to the present invention, said polyether-polyamine is a diamine or a triamine. In a further example, the amine is a polymeric polyamine.
In another example, the primary polyamine is a triprimary triamine(s) having spacer groups between each of the three primary amines which consist of carbon chains, such as triprimary triamine(s) selected from the group consisting of triaminodecanes, triaminononanes, triaminooctanes, triaminoheptanes, triaminohexanes, triaminopentanes, and combinations thereof, more preferably 4-(aminomethyl)-1,8-octanediamine. The spacer groups may be selected from the groups consisting of alkanediyls, heteroalkanediyls, alkenediyls, heteroalkenediyls, alkynediyls, heteroalkynediyls, linear alkanediyls, linear heteroalkanediyls, linear alkenediyls, linear heteroalkenediyls, linear alkynediyls, linear heteroalkynediyls, cycloalkanediyls, cycloheteroalkanediyls, cycloalkenediyls, cycloheteroalkenediyls, cycloalkynediyls and cycloheteroalkynediyls, each of which may be branched or unbranched. The spacer group(s) may be selected from the groups consisting of alkanediyls, alkenediyls, alkynediyls, linear alkanediyls, linear alkenediyls, linear alkynediyls, cycloalkanediyls, cycloalkenediyls and cycloalkynediyls, each of which may be branched or unbranched.

The viscosity reducing agent may be present in a weight ratio of 0.5, preferably 1, to 30 %, preferably up to 25 w% in the binder composition, based on the bulk composition. The concentration of the viscosity reducing agent will depend on the agent as such and on the effect desired, depending on the other components of the composition.

The binder composition may further comprise one or more adjuvants common in the art of binder preparation, for example waxes, dyes, dedusters and release agents. It may further comprise, if so desired, appropriate catalysts that catalyse the reaction between cellulose ether components.

The binder composition preferably does not comprise any added formaldehyde. It may be "substantially formaldehyde free", that is to say that it liberates less than 5 ppm formaldehyde as a result of drying and/or curing (or appropriate tests simulating drying and/or curing); more preferably it is "formaldehyde free", that is to say that it liberates less than 1 ppm formaldehyde in such conditions.

The binders of the invention may be used to bond a collection of non or loosely assembled matter which comprises fibers selected from mineral fibers, slag wool fibers, stone wool fibers, glass fibers, aramid fibers, ceramic fibers, metal fibers, carbon fibers.

In one illustrative embodiment, the binder composition of the invention may be used to make thermal insulation products, comprising mineral fibers. In such an application, the fibers are bonded together such that they become organized in a fiberglass mat which may then be processed into an insulation product. In such an application, the fibers are generally present in an amount ranging from 70 to 99% by total weight of the insulation product, notably from 80 to 99% or from 85 to 99%.

The aqueous binder composition may be applied onto the fibers by spray application. Other possible techniques include roll application or mixing and/or tumbling the collection of matter with the binder composition. As water evaporates the binder composition may form a gel that bonds the particulate material together when arranged into a desirable assembly. When curing, the cellulose ether compounds are caused to react to form a macromolecular binder. Curing thus imparts increased adhesion and durability as compared to uncured binder. Curing may be effected at temperatures between ambient and up to 280°C.

The advantageous properties of invention composites will be shown in more details herein below.

### Example 1

A known binder composition for bonding of mineral fibers was prepared as follows: citric acid and a slight excess of ammonia were mixed in water and finally dextrose was added in a weight ratio of 15:85 (ammonium citrate to dextrose). The binder composition showed a solids content of 1.4 %.

Donuts were cut out of a high density rock mineral wool mat using a donut cutter. All donuts were cut in the same fiber orientation in order to ensure reliability and consistency of the results. The obtained donuts were submerged into the relevant binder composition until completely saturated, for about 10 seconds. Excess binder was then drained off. Thereafter, the donuts were dried individually by wrapping in tissue paper and placing the wrapped donuts individually in a microwave (standard settings) for 2 min 30 seconds on each side. The operation was repeated for 1 min 30 seconds on each side after having turned over the donut and wrapped in fresh tissue paper. The donuts were then unwrapped and microwaved for successive 30 second periods, thereby being each time rotated, until they start colouring.

The dried donuts were hang on a metal stand using paper clips and placed in an oven, and cured at 180 °C for 30 minutes.

The LOI (loss on ignition) which represents the quantity of binder solid applied on the mineral fibers was determined to be 4.08 %.

Further, a binder composition was prepared by diluting a commercial sodium carboxymethyl cellulose of MW of approx. 40000 (Finnfix 2 by CP Kelco) in water, in a concentration of 0.4% solids content. Donuts were prepared as disclosed above. The dried donuts were fully cured in a microwave. The LOI was 1.36 %.

For the sake of clarity and completeness, LOI is measured after heat treatment in an oven at 600 °C for 30 minutes.

The donut samples were subjected to a tensile strength test (donut test) according to the following test procedure:

The parting strength was measured on a testometric machine, on a dry donut sample and expressed in N (Newtons). It corresponds to the total load at breaking apart of a donut pulled apart by the hook fixtures of the testometric machine. The citric acid based binder provided a tensile strength of 106.51 N and the CMC based binder provided a comparable tensile strength of 111 N.

Hence, reduced amounts of CMC based binder still provide tensile strength values comparable to those obtained with known binder.

### Example 2

A known binder composition for bonding of glass fibers was prepared as follows: citric acid and a slight excess of ammonia were mixed in water and finally dextrose was added in a weight ratio of 15:85 (ammonium citrate to dextrose). The binder composition showed a solids content of 3 %.

The obtained binder composition was applied to a veil of glass mineral wool fibers by soaking the veil in a dip tray filled with binder composition as prepared, until complete saturation of the veil. Excess binder was removed (dripping off and soaking on tissue paper) The resinated veil was then placed in a Mathis oven and cured at 200 °C for 8 minutes. The LOI was recorded at 13.02 %.

The cured veil was cut into appropriate samples for tensile strength testing on a testometric machine.

A binder composition was prepared by diluting FINN FIX 2 (CP Kelco), a commercial sodium carboxymethyl cellulose of MW of approximately 40000, in water in a concentration of 2% solids.

The obtained binder composition was applied to a glass veil as described above. The resinated veil was the placed in a Mathis oven and cured at 200°C for 8 minutes. The LOI was recorded at 12.00 %.

The cured veil again was cut into appropriate samples for tensile strength testing.

In order to test the dry (D) tensile strength, the veil samples were secured vertically within the rubber grip area of the grippers, in the testometric machine. A 50 kg load cell is applied and the machine is switched on.

In order to test the weathered (W) tensile strength (after autoclaving), the precut cured veil samples are loaded into an autoclave and the autoclaving cycle is initiated. The autoclave cycle involves a 5 minute purge time, a sterilising temperature of 121 °C and a holding time of 15 minutes. Once the cycle is finished, the samples are withdrawn, dabbed with tissue paper and tested immediately for tensile strength on the testometric machine, as described above. The following results have been obtained:

| **Test** | **Dextrose Amm. Citrate @ 3% solids** | **CMC FinnFix2 @ 2% solids** |
|---|---|---|
| **D strength** | 84.68 | 72.42 |
| **W strength** | 62.47 | 58.43 |

### Example 3

Similarly, the same known binder composition was prepared as per Example 2, except that it showed a solids content of 5%. The obtained binder composition was applied onto rock mineral wool donuts as per Example 1 (at an LOI of 12.61 %) which were cured as in example 1, and then subjected to tensile strength testing as described in

### Example 4.

A binder composition was prepared by diluting FINNFIX 2 (CP Kelco), a commercial sodium carboxymethyl cellulose of MW of approx. 40000, in water, in a concentration of 3 % solids content. The obtained binder composition was applied to rock mineral wool donuts as described above with reference to Example 1 (at a LOI of 11.27 %) which were cured as in example 1, and then subjected to tensile strength test as described in Example 1, comprising dry (D) strength and weathered (W) strength.

The following Tables shows the results obtained:

| **Test** | **Dextrose amm.citrate at 5% solids** | **CMC binder at 3 % solids** |
|---|---|---|
| **D strength** | 210.78 N | 325.25 N |
| **W strength** | 87.07 N (41.3 %) | 157.65 N (48.4 %) |

The above Table shows that equivalent or better strength may be obtained when using cellulose ether based binders, at reduced concentrations compared to known citric acid binders. Example 4

The purpose of this Example is to show that wet strength improving agents as suggested herein allow to recover a significant part of the dry strength. The CMC based binder compositions of Example 2 were complemented with 5 wt%, 10 wt% and 20 wt% ammonium sulphate, and the wet tensile strength was repeated after autoclaving and two hours drying at ambient temperature. Further, the wet tensile strength was measured after soaking the samples during 10 minutes in a 80 °C water bath, and 2 hours drying at ambient temperature. The results are summarized in the Table below:

### Wet strength - soaking test

| **Additive** | **% Recovered after 2 hrs drying** |
|---|---|
| **5% Ammonium Sulphate** | 77.52% |
| **10% Ammonium Sulphate** | 86.23% |
| **20% Ammonium Sulphate** | 77.91% |

### Wet strength - autoclaving

| **Additive** | **% Recovered after 2 hrs drying** |
|---|---|
| **5% Ammonium Sulphate** | 70.70% |
| **10% Ammonium Sulphate** | 60.16% |
| **20% Ammonium Sulphate** | 35.50% |

The tables show absolutely interesting results, knowing that known carbohydrate based binders, such as dextrose + ammonium citrate (85/15), hardly reach 80% recovery under the said conditions.

### Example 5

This example has been designed to evidence the effect of the addition of urea.

A composition was prepared by diluting FINNFIX 2 (CP Kelco), a commercial sodium carboxymethyl cellulose of MW of approximately 40000, in water in a concentration of 10% solids. The viscosity of the composition was measured in a Brookfield Viscometer using spindle S31. The results are shown in the Table below.

| Rotations per minute | Viscosity (cP) |
|---|---|
| 2.5 | 670 |
| 5 | 630 |
| 10 | 608 |
| 20 | 575 |
| 50 | 525 |

Clearly, increasing the spindle speed, hence increasing the agitation, leads to lower viscosities.

The above composition was complemented with urea, up to 25 wt%, based on the weight of the bulk solution; i.e. 25 % equates to 50g urea added to 200g bulk CMC solution. The viscosity is determined by a Brookfield Viscometer, making use of spindle S31, after each urea addition. The results are shown in the Table below:

| Rotations per minute | Standard: 10% CMC Binder | 10% urea addition | 15% urea addition | 20% urea addition | 25% urea addition |
|---|---|---|---|---|---|
| 10 | 608 | 410 | 360 | 282 | 263 |
| 20 | 575 | 395 | 348 | 277 | 255 |
| 50 | 525 | 370 | 327 | 264 | 244 |

Clearly, urea addition appears to significantly reduce the viscosity of the tested composition.

It has been further found that the addition of urea also increases the tensile strength. If a 2% solids FINNFIX 2 (CP Kelco) binder composition shows a tensile strength of 63.34 N, the same composition complemented with 20 wt% (based on the weight of the bulk solution) urea shows a solids content of 6% and a 88.63 N dry tensile strength.

### Example 6

This example is designed to show the effect of amines as viscosity reducing agents.

The same 10% FINNFIX 2 solution (i.e. 20g in 180g water) was prepared as in Example 5 here above. A Brookfield Viscometer fitted with the S31 spindle was used to record relevant measurements.

The above FINNFIX solution was complemented with 2 g (10%) and 4 g (20%) of 4-(aminomethyl)-1,8-octanediamine. The following results were obtained:

| Rotations per minute | Standard FINNFIX 2 | 2g amine Addition (10%) | 2g amine Addition (20%) |
|---|---|---|---|
| 10 | 580 | 389 | 375 |
| 20 | 558 | 374 | 360 |
| 50 | 519 | 340 | 330 |

A 2 g addition of 4-(aminomethyl)-1,8-octanediamine reduces the viscosity by 34%. Further addition offers little improvement.

The same experiment was repeated, but HMDA (hexamethylene diamine) was used as the amine. The following results were obtained:

| Rotations per minute | Standard FINNFIX 2 | 2g amine Addition (10%) | 2g amine Addition (20%) |
|---|---|---|---|
| 10 | 561 | 264 | 245 |
| 20 | 543 | 255 | 237 |
| 50 | 501 | 242 | 227 |

Here again, the HMDA addition significantly reduces the binder viscosity (by 53%) and a further addition reduces the viscosity only slightly.

In both cases, use of diamine and use of triamine, the dry tensile strength remained essentially unaffected.

It has further been found that after 3 hours of storage the viscosity further reduced. More extended storage provided little difference, though. The results are shown below:

| Rotations per minute | 4g HMDA Addition (20%) |
|---|---|
| 10 | 188 |
| 20 | 184 |
| 50 | 183 |

## Claims

1. A composite product comprising mineral fibers bonded by a binder obtained upon curing from an aqueous binder composition consisting essentially of (i) 0.2 to 15.0 wt% (based on total aqueous binder composition) of one or more cellulose ethers, (ii) optionally one or more adjuvants selected from waxes, dyes, dedusters, release agents and/or catalyst, (iii) optionally one or more wet strength improving additives selected from ammonium salts of inorganic acids and azetidinium compounds in a range of 0.5 to 20 wt%, (iv) optionally a viscosity reducing agent in the range of 0.5 to 30 wt% based on the bulk composition, and (v) possibly reaction products thereof.

2. The composite product of claim 1 wherein the cellulose ethers are selected from alkyl cellulose, hydroxyalkyl cellulose and carboxyalkyl cellulose.

3. The composite product of claim 2 wherein the cellulose ether selected from methyl cellulose, ethylcellulose, hydroxyethyl cellulose, hydroxypropyl cellulose, hydroxyethylmethyl cellulose, hydroxypropylmethyl cellulose, carboxymethyl cellulose, more particularly sodium carboxymethyl cellulose.

4. The composite product of any of claims 1 to 3 wherein the degree of substitution of the hydroxyl groups of the cellulose ether moieties varies from 0.20, or 0.30, or 0.40, or 0.50 to 3.00, particularly to 2.50, or to 2.00, or to 1.50, or even 1.00.

5. The composite product of any of claims 1 to 4 wherein the molecular weight of the cellulose ether is of 80000 or less, advantageously 70000 or less, preferably 60000 or less, more preferably 50000 or less, for example about 40000 Daltons.

6. The composite product of any of claims 1 to 5 wherein the binder composition comprises from 0.5 or 1.0 to 5.0, or 7.0 or 10.0 w% cellulose ether, based on total aqueous binder composition.

7. The composite product of any of claims 1 to 6 wherein the one or more wet strength improving ammonium salts of inorganic acids is selected from ammonium phosphate, ammonium nitrate or ammonium sulphate.

8. The composite product of claim 7 wherein the wet strength improving additive is present in a weight ratio of 1 up to 15 w%, or even 10 w% in the binder composition.

9. The composite product of any of the preceding claims wherein the binder composition comprises the viscosity reducing agent in the range of 1, to 25 wt%, based on the bulk composition.

10. The composite product of claim 9 wherein the viscosity reducing agent is selected from urea and derivatives thereof, biurea, thiourea, guanidine salts, sodium salts, such as sodium nitrate, sodium chloride, hydrochloric acid, calcium salts, such as calcium dichloride, Ca⁺⁺ as well as Li⁺ precursors that provide the ions in solution, amine compounds, comprising inorganic and organic amines, having at least one primary amine group, and salts thereof as well as compounds that generate such amines in situ, such as primary polyamine having the formula H₂N-Q-NH₂, wherein Q is an alkyl, cycloalkyl, heteroalkyl or cycloheteroalkyl, each of which being optionally substituted, for example HMDA, a polyether-polyamine, a polymeric polyamine, a triprimary triamine having spacer groups between each of the three primary amines which consist of carbon chains, for example 4-(aminomethyl)-1,8-octanediamine.

11. The composite product of any of the preceding claims being a mineral wool insulation product.

12. A process for the manufacture of a composite product according to any of the preceding claims comprising providing an assembly of mineral fibers, applying binder composition onto the mineral fibers and subjecting the mineral fibers to curing conditions, wherein the binder composition consists essentially of one or more cellulose ethers and optionally one or more adjuvants and optionally one or more wet strength improving additives and/or viscosity reducing additive, and possibly reaction product thereof.

13. The Process of claim 12 showing one or more of the following features:
wherein the binder composition is an aqueous binder composition and is applied to the mineral fibers by spraying, roll application, dipping of mineral fibers into an aqueous binder composition or mixing and/or tumbling an assembly of mineral fibers with binder composition;
wherein the mineral fibers are present in an amount ranging from 70 to 99% by total weight of the insulation product, notably from 80 to 99% or from 85 to 99%.

## Patentansprüche

1. Verbundprodukt, das Mineralfasern umfasst, die durch ein Bindemittel gebunden sind, das durch Aushärten aus einer wässrigen Bindemittelzusammensetzung erhalten wird, die im Wesentlichen aus (i) 0,2 bis 15,0 Gew.-% (bezogen auf die gesamte wässrige Bindemittelzusammensetzung) eines oder mehrerer Celluloseether, (ii) gegebenenfalls einem oder mehrerer Hilfsstoffe, ausgewählt aus Wachsen, Farbstoffen, Entstaubern, Trennmitteln und/oder Katalysatoren, (iii) gegebenenfalls einem oder mehrerer die Nassfestigkeit verbessernde Additive, ausgewählt aus Ammoniumsalzen anorganischer Säuren und Azetidiniumverbindungen, in einem Bereich von 0,5 bis 20 Gew.-%, (iv) gegebenenfalls einem viskositätsreduzierendes Mittel im Bereich von 0,5 bis 30 Gew.-%, bezogen auf die Massezusammensetzung, und (v) möglicherweise Reaktionsprodukte davon.

2. Verbundprodukt nach Anspruch 1, wobei die Celluloseether aus Alkylcellulose, Hydroxyalkylcellulose und Carboxyalkylcellulose ausgewählt sind.

3. Verbundprodukt nach Anspruch 2, wobei der Celluloseether ausgewählt ist aus Methylcellulose, Ethylcellulose, Hydroxyethylcellulose, Hydroxypropylcellulose, Hydroxyethylmethylcellulose, Hydroxypropylmethylcellulose, Carboxymethylcellulose, insbesondere Natriumcarboxymethylcellulose.

4. Verbundprodukt nach einem der Ansprüche 1 bis 3, wobei der Substitutionsgrad der Hydroxylgruppen der Celluloseethereinheiten von 0,20 oder 0,30 oder 0,40 oder 0,50 bis 3,00, insbesondere bis 2,50 oder bis 2,00 oder bis 1,50 oder sogar 1,00 variiert.

5. Verbundprodukt nach einem der Ansprüche 1 bis 4, wobei das Molekulargewicht des Celluloseethers 80.000 oder weniger, vorteilhafterweise 70.000 oder weniger, vorzugsweise 60.000 oder weniger, insbesondere 50.000 oder weniger, beispielsweise etwa 40.000 Dalton, beträgt.

6. Verbundprodukt nach einem der Ansprüche 1 bis 5, wobei die Bindemittelzusammensetzung 0,5 oder 1,0 bis 5,0 oder 7,0 oder 10,0 Gew.-% Celluloseether, bezogen auf die gesamte wässrige Bindemittelzusammensetzung, umfasst.

7. Verbundprodukt nach einem der Ansprüche 1 bis 6, wobei das eine oder die mehreren die Nassfestigkeit verbessernden Ammoniumsalze anorganischer Säuren aus Ammoniumphosphat, Ammoniumnitrat oder Ammoniumsulfat ausgewählt sind.

8. Verbundprodukt nach Anspruch 7, wobei der die Nassfestigkeit verbessernde Zusatzstoff in einem Gewichtsverhältnis von 1bis zu 15 Gew.-% oder sogar 10 Gew.-% in der Bindemittelzusammensetzung vorhanden ist.

9. Verbundprodukt nach einem der vorhergehenden Ansprüche, wobei die Bindemittelzusammensetzung das viskositätsreduzierende Mittel im Bereich von 1 bis 25 Gew.-%, bezogen auf die Massezusammensetzung, umfasst.

10. Verbundprodukt nach Anspruch 9, wobei das viskositätsreduzierende Mittel ausgewählt ist aus Harnstoff und Derivaten davon, Biharnstoff, Thioharnstoff, Guanidinsalzen, Natriumsalzen wie Natriumnitrat, Natriumchlorid, Salzsäure, Calciumsalzen, wie Calciumdichlorid, Ca++- sowie Li+-Vorläufer, die die Ionen in Lösung bereitstellen, Aminverbindungen, die anorganische und organische Amine umfassen, mit mindestens einer primären Amingruppe und Salze davon, sowie Verbindungen, die solche Amine in situ erzeugen, wie z. B. primäres Polyamin mit der Formel H₂N-Q-NH₂, wobei Q ein Alkyl, Cycloalkyl, Heteroalkyl oder Cycloheteroalkyl ist, von denen jedes gegebenenfalls substituiert ist, zum Beispiel HMDA, ein Polyetherpolyamin, ein polymeres Polyamin, ein triprimäres Triamin mit Abstandsgruppen zwischen jedem der drei primären Amine, die aus Kohlenstoffketten bestehen, beispielsweise 4-(Aminomethyl)-1,8-octandiamin.

11. Verbundprodukt nach einem der vorangehenden Ansprüche, das ein Isolierprodukt aus Mineralwolle ist.

12. Verfahren zur Herstellung eines Verbundprodukts nach einem der vorhergehenden Ansprüche, umfassend das Bereitstellen einer Anordnung aus Mineralfasern, das Auftragen einer Bindemittelzusammensetzung auf die Mineralfasern und das Aussetzen der Mineralfasern zu Aushärtungsbedingungen, wobei die Bindemittelzusammensetzung im Wesentlichen aus einem oder mehreren Celluloseethern und gegebenenfalls einem oder mehreren Adjuvantien und gegebenenfalls einem oder mehreren Additiven zur Verbesserung der Nassfestigkeit und/oder einem viskositätsreduzierenden Additiv und möglicherweise einem Reaktionsprodukt davon, besteht.

13. Verfahren nach Anspruch 12, das eines oder mehrere der folgenden Merkmale aufweist:
wobei die Bindemittelzusammensetzung eine wässrige Bindemittelzusammensetzung ist und auf die Mineralfasern durch Sprühen, Rollenauftrag, Eintauchen von Mineralfasern in eine wässrige Bindemittelzusammensetzung oder Mischen und/oder Trommeln einer Anordnung von Mineralfasern mit Bindemittelzusammensetzung, aufgebracht wird;
wobei die Mineralfasern in einer Menge im Bereich von 70 bis 99 % des Gesamtgewichts des Isolierprodukts, insbesondere von 80 bis 99 % oder von 85 bis 99 %, vorhanden sind.

## Revendications

1. Produit composite comprenant des fibres minérales liées par un liant obtenu lors du durcissement à partir d'une composition de liant aqueuse constituée essentiellement de (i) 0,2 à 15,0 % en poids (sur base de la composition de liant aqueuse totale) d'un ou plusieurs éthers de cellulose, ( ii) éventuellement un ou plusieurs adjuvants choisis parmi les cires, les colorants, les dépoussiérants, les agents de démoulage et/ou les catalyseurs, (iii) éventuellement un ou plusieurs additifs améliorant la résistance mécanique à l'état humide, choisis parmi les sels d'ammonium d'acides inorganiques et les composés d'azétidinium dans une plage de 0,5 à 20 % en poids, (iv) éventuellement un agent réducteur de viscosité dans la plage de 0,5 à 30 % en poids sur la base de la composition globale, et (v) éventuellement des produits de réaction de ceux-ci.

2. Produit composite selon la revendication 1, dans lequel les éthers de cellulose sont choisis parmi l'alkylcellulose, l'hydroxyalkylcellulose et la carboxyalkylcellulose.

3. Produit composite selon la revendication 2, dans lequel l'éther de cellulose est choisi parmi la méthylcellulose, l'éthylcellulose, l'hydroxyéthylcellulose, l'hydroxypropylcellulose, l'hydroxyéthylméthylcellulose, l'hydroxypropylméthylcellulose, la carboxyméthylcellulose, plus particulièrement la carboxyméthylcellulose de sodium.

4. Produit composite selon l'une des revendications 1 à 3, dans lequel le degré de substitution des groupes hydroxyles des groupements éther de cellulose varie de 0,20, ou 0,30, ou 0,40, ou 0,50 à 3,00, plus particulièrement à 2,50, ou à 2,00, ou à 1,50, voire 1,00.

5. Produit composite selon l'une des revendications 1 à 4, dans lequel le poids moléculaire de l'éther de cellulose est de 80 000 ou moins, avantageusement de 70 000 ou moins, de préférence de 60 000 ou moins, plus particulièrement de 50 000 ou moins, par exemple d'environ 40 000 Daltons.

6. Produit composite selon l'une des revendications 1 à 5, dans lequel la composition de liant comprend de 0,5 ou 1,0 à 5,0, ou 7,0 ou 10,0 % en poids d'éther de cellulose, sur base de la composition de liant aqueuse totale.

7. Produit composite selon l'une des revendications 1 à 6, dans lequel le ou les additifs améliorant la résistance mécanique à l'état humide à base de sels d'ammonium d'acides inorganiques sont choisis parmi le phosphate d'ammonium, le nitrate d'ammonium ou le sulfate d'ammonium.

8. Produit composite selon la revendication 7, dans lequel l'additif améliorant la résistance mécanique à l'état humide est présent dans un rapport pondéral de 1 à 15 % en poids, ou même 10 % en poids dans la composition de liant.

9. Produit composite selon l'une des revendications précédentes, dans lequel la composition de liant comprend l'agent réducteur de viscosité dans la gamme de 1 à 25 % en poids, sur base de la composition globale.

10. Produit composite selon la revendication 9, dans lequel l'agent réducteur de viscosité est choisi parmi l'urée et ses dérivés, la biurée, la thiourée, les sels de guanidine, les sels de sodium, tels que le nitrate de sodium, le chlorure de sodium, l'acide chlorhydrique, les sels de calcium, tels que le dichlorure de calcium, les précurseurs de Ca++ ainsi que de Li+ qui fournissent les ions en solution, les composés aminés, comprenant des amines inorganiques et organiques, ayant au moins un groupe amine primaire, et leurs sels ainsi que les composés générant de telles amines in situ, tels que les polyamines primaires ayant le formule H₂N-Q-NH₂, dans laquelle Q représente un alkyle, un cycloalkyle, un hétéroalkyle ou un cyclohétéroalkyle, chacun étant éventuellement substitué, par exemple HMDA, une polyéther-polyamine, une polyamine polymère, une triamine triprimaire ayant des groupes d'espacement entre chacune des trois amines primaires, qui consiste en une chaîne carbonée, par exemple la 4-(aminométhyl)-1,8-octanediamine.

11. Produit composite selon l'une des revendications précédentes, ledit produit composite étant un produit isolant à base de laine minérale.

12. Procédé de fabrication d'un produit composite selon l'une des revendications précédentes comprenant la fourniture d'un assemblage de fibres minérales, l'application d'une composition de liant sur les fibres minérales et la soumission des fibres minérales à des conditions de durcissement, la composition de liant étant essentiellement constituée d'un ou plusieurs éthers de cellulose et éventuellement d'un ou plusieurs adjuvants et éventuellement d'un ou plusieurs additifs améliorant la résistance mécanique à l'état humide et/ou d'un ou plusieurs additifs réduisant la viscosité, et éventuellement d'un produit de réaction de ceux-ci.

13. Procédé selon la revendication 12 ayant une ou plusieurs des caractéristiques suivantes :
la composition de liant est une composition de liant aqueuse et est appliquée sur les fibres minérales par pulvérisation, au rouleau, par trempage de fibres minérales dans une composition de liant aqueuse ou par mélange et/ou culbutage d'un assemblage de fibres minérales avec la composition de liant;
les fibres minérales sont présentes en une quantité allant de 70 à 99 % en poids total du produit isolant, notamment de 80 à 99 % ou de 85 à 99 %.
